# EUROPÄISCHE PATENTSCHRIFT

(11) **EP 0 985 301 B1**
(45) Veröffentlichungstag und Bekanntmachung des Hinweises auf die Patenterteilung: **03.01.2007**
(21) Anmeldenummer: 98934814.9
(22) Anmeldetag: 27.05.1998
(51) Int. Cl.: H04L 12/58, H04M 3/50

(54) **E-MAIL SERVER EINES E-MAIL SERVICE PROVIDERS**
E-MAIL SERVER OF A PROVIDER OF E-MAIL SERVICES
SERVEUR DE MESSAGERIE ELECTRONIQUE D'UN FOURNISSEUR DE SERVICES EN MESSAGERIE ELECTRONIQUE

(30) Priorität: 27.05.1997 DE 29709293 U
(43) Veröffentlichungstag der Anmeldung: 15.03.2000
(73) Patentinhaber: SIEMENS AKTIENGESELLSCHAFT, 80333 München (DE)
(72) Erfinder: KROB, Silvia, D-81541 München (DE); KURZAWA, Hendrik, D-81379 München (DE); LANGE, Thomas, D-84034 Landshut (DE); LINDENTHAL, Andreas, D-81247 München (DE); SCHMIDT, Christian, D-86163 Augsburg (DE); UNGRUH, Joachim, D-80638 München (DE)
(86) Internationale Anmeldenummer: PCT/DE1998/001456
(87) Internationale Veröffentlichungsnummer: WO 1998/054873

(56) Entgegenhaltungen:
- EP-A- 0 798 899
- US-A- 5 138 653

## Beschreibung

Ein Teilnehmer konnte bisher nur in der Weise erfahren, ob er eine neue Email erhalten hat oder nicht, indem er sich bei seinem Email Service Provider einloggt. Insbesondere für Benutzer, die ausschließlich den Service Emails im Rahmen von Internet benutzen, ist dies bei einer nicht zu hohen Anzahl von Email-Verkehr mit Aufwand und Kosten verbunden (Rechner starten und einloggen sowie Gebühren). Der Benutzer konnte nicht automatisch informiert werden (insbesondere nicht, ohne den Rechner anzuschalten), wenn neue Emails eintreffen.

Die Erfindung ermöglicht es nunmehr, einem Fernsprechteilnehmer über seine Telefonleitung anzuzeigen, dass eine neue Email eingetroffen ist. Dies wird über einen speziell angelegten Ton und eventuell einer Anzeige auf dem Display des Apparates realisiert.

Ein Vorteil der Erfindung liegt darin, dass der Email-Benutzer unabhängig von seinem PC informiert werden kann, dass eine neue Email vorliegt. Der Email-Empfänger wird über seinen Telefonanschluß informiert, dass eine Email eingetroffen ist.

Aus der niederländischen Patentschrift NL C 1 00 27 04 ist ein Email Server bekannt, der einen Email-Teilnehmer ebenfalls über das Telefonnetz vom Vorliegen einer Mail benachrichtigen kann. Dazu benötigt er allerdings zusätzliche Komponenten, die die entsprechende Verbindung über das Telefonnetz steuern.

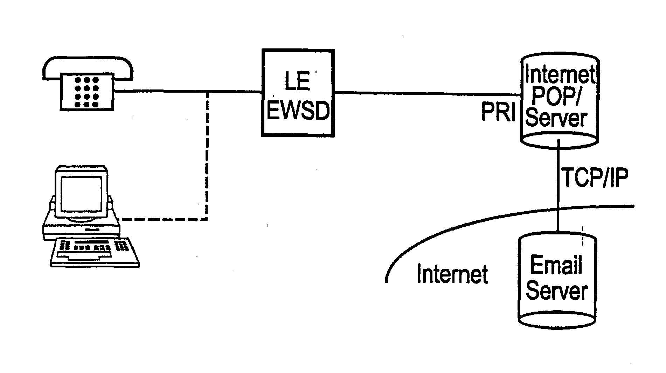

Im Folgenden wird ein Ausführungsbeispiel der Erfindung anhand der Zeichnung näher erläutert. Die Zeichnung umfasst eine Figur.

Wie in der Figur dargestellt, informiert der Email Server des Email Service Providers den PoP (Point of Presence = Einwählpunkt des Teilnehmers ins Internet) über eine TCP/IP-Nachricht, wenn sich der Mail-Status des Teilnehmers ändert (z.B neue Mails angekommen). Diese Nachricht enthält die E.164 Nummer des Teilnehmers und den Mail-Status des Teilnehmers (d.h. die Zahl der ungelesenen Emails). Eine spezielle Applikation auf dem PoP isoliert diese Daten und sendet den Mail-Status in einer D-Kanal-Meldung (z. B. Register oder Facility) über eine Primärmultiplexleitung PRI zur Local Exchange LE des Teilnehmers. Der Teilnehmer wird über die E.164 Nummer identifiziert. Die Information wird in einem Zentralprozessor der Local Exchange LE transient gespeichert und der Anschlußgruppe, an der der Teilnehmer angeschlossen ist, zugeschickt. Im Falle, daß neue Emails angekommen sind, wird beim Teilnehmer ein spezieller Ton angelegt, bei,ISDN Keypad Teilnehmern wird zusätzlich die Zahl der neuen Emails am Display angezeigt.

Um den oben beschriebenen Informationsweg zu gewährleisten, müssen auf dem Email Server folgende Adressen für jeden Teilnehmer gespeichert sein:
- E.164 Adresse des Teilnehmers (für Indikation, daß neue Email da)
- IP Adresse des Teilnehmers (für Zustellung der Mail)
- IP Adresse des zugehörigen PoPs (für Verknüpfung von Internet und EWSD).

## Patentansprüche

1. Email Server eines Email Service Providers, der derart ausgestaltet ist, dass er
a) für jeden Teilnehmer die IP-Adresse des Internet-Einwählpunkts (POP) des Teilnehmers sowie die Telefonnetz-Nummer des Teilnehmers speichert,
b) den Internet-Einwählpunkt (POP) eines Teilnehmers bei Vorliegen einer neuen Mail mit Hilfe einer entsprechenden Nachricht informiert, wobei er in dieser Nachricht außerdem die Telefonnetz-Nummer des Teilnehmers mitsendet.

2. Email Server nach Anspruch 1,
**dadurch gekennzeichnet, daß**
es sich bei der genannten Nachricht um eine Internet-Nachricht handelt.

3. Einwählpunkt (POP) eines über das Telefonnetz an das Internet angeschlossenen Teilnehmers, der derart ausgestaltet ist, dass er
- von einem Email-Server eine Nachricht über das Vorliegen einer neuen Mail für einen Teilnehmer empfängt,
- der empfangenen Nachricht die Telefonnetz-Nummer des Teilnehmers entnimmt und
- die Information über das Vorliegen einer neuen Mail in einer nachfolgenden Nachricht an die lokale Vermittlungsstelle des Teilnehmers weiterleitet.

4. Einwählpunkt nach Anspruch 3,
**dadurch gekennzeichnet, daß**
es sich bei der genannten nachfolgenden Nachricht um eine Telefonnetz-Nachricht handelt.

5. Verfahren zum Benachrichtigen eines Email-Teilnehmers vom Vorliegen einer Mail, demgemäß
ein Einwählpunkt (POP) eines über das Telefonnetz an das Internet angeschlossenen Teilnehmers vom Vorliegen einer Mail von einem Email Server informiert wird, wobei diese Information von dem Einwählpunkt (POP) an die lokale Vermittlungsstelle des Teilnehmers weitergeleitet wird, und der Teilnehmer schließlich von dieser lokalen Vermittlungsstelle über das Vorliegen einer Mail informiert wird.

## Claims

1. E-mail server of an e-mail service provider, which is configured such that it
a) stores the IP address of the point of presence (POP) of the subscriber and the telephone network number of the subscriber,
b) informs the point of presence (POP) of a subscriber, by means of an appropriate message, of the presence of new mail, additionally including in this message the telephone network number of the subscriber.

2. E-mail server according to Claim 1, **characterized in that** said message is an Internet message.

3. Point of presence (POP) of a subscriber connected to the Internet via the telephone network, which is configured such that it
- receives a message from an e-mail server indicating the presence of new mail for a subscriber,
- draws the telephone network number of the subscriber from the message received and
- in a subsequent message passes the information indicating the presence of new mail to the local exchange of the subscriber.

4. Point of presence according to Claim 3, **characterized in that** said subsequent message is a telephone network message.

5. Method for advising an e-mail subscriber of the presence of mail, according to which
a point of presence (POP) of a subscriber connected to the Internet via the telephone network is informed of the presence of mail by an e-mail server, this information being passed from the point of presence (POP) to the local exchange of the subscriber, and the subscriber in turn being informed of the presence of mail by this local exchange.

## Revendications

1. Serveur de messagerie électronique d'un fournisseur de services en message électronique, qui est conçu de telle manière que,
a) pour chaque abonné, il mémorise l'adresse IP du point de présence Internet (POP) de l'abonné ainsi que le numéro du réseau téléphonique de l'abonné,
b) il informe le point de présence Internet (POP) d'un abonné, en cas de présence d'un nouveau message électronique, à l'aide d'un message correspondant, en envoyant en outre dans ce message le numéro du réseau téléphonique de l'abonné.

2. Serveur de messagerie électronique selon la revendication 1,
**caractérisé en ce que**
le message mentionné est un message Internet.

3. Point de présence (POP) d'un abonné raccordé à l'Internet par l'intermédiaire du réseau téléphonique, qui est conçu de telle manière qu'
- il reçoit d'un serveur de messagerie électronique un message concernant la présence d'un nouveau message électronique pour un abonné,
- il conclut le numéro du réseau téléphonique de l'abonné à partir du message reçu et que
- dans un message suivant, il transfère au centre de commutation local de l'abonné l'information concernant la présence d'un nouveau message électronique.

4. Point de présence selon la revendication 3,
**caractérisé en ce que**
le message suivant mentionné est un message de réseau téléphonique.

5. Procédé pour informer un abonné de messagerie électronique de la présence d'un message électronique, selon lequel
un point de présence (POP) d'un abonné raccordé à l'Internet par l'intermédiaire du réseau téléphonique est informé par un serveur de messagerie électronique de la présence d'un message électronique, cette information étant transférée par le point de présence (POP) au centre de commutation local de l'abonné, et l'abonné étant finalement informé par ce centre de commutation local de la présence d'un message électronique.
